# EUROPEAN PATENT APPLICATION

(11) **EP 4 588 842 A1**
(43) Date of publication of application: **23.07.2025**
(21) Application number: 24153050.0
(22) Date of filing: 22.01.2024
(51) Int. Cl.: B65G 1/04

(54) **CONTAINER HANDLING VEHICLE FOR AN AUTOMATED STORAGE AND RETRIEVAL SYSTEM**

(71) Applicant: AUTOSTORE TECHNOLOGY AS, 5578 Nedre Vats (NO)
(72) Inventor: Müller, Kenneth, 5578 Nedre Vats (NO)
(74) Representative: Kilburn & Strode LLP

(57) **Abstract**

A container handling vehicle for an automated storage and retrieval system, wherein the container handling vehicle comprises a vehicle body; wheels connected to the vehicle body, for moving the container handling vehicle; and a container lifting platform, for lifting a container within a storage column of the automated storage and retrieval system. There is provided a plurality of wires for connecting the vehicle body to the container lifting platform; each of the plurality of wires having an associated spool configured to receive a wire of the plurality of wires; and one or more position controllers for controlling the spooling position of each of the plurality of wires around its associated spool to form a plurality of adjacent turns around an outer surface of the spool. Also provided is a lifting system and method of operating a container handling vehicle.

## Description

### TECHNICAL FIELD

The present invention relates to an automated storage and retrieval system for storage and retrieval of containers, in particular a container handling vehicle as well as a lifting system for a container handling vehicle and a method of operating a lifting platform on a container handling vehicle.

### BACKGROUND

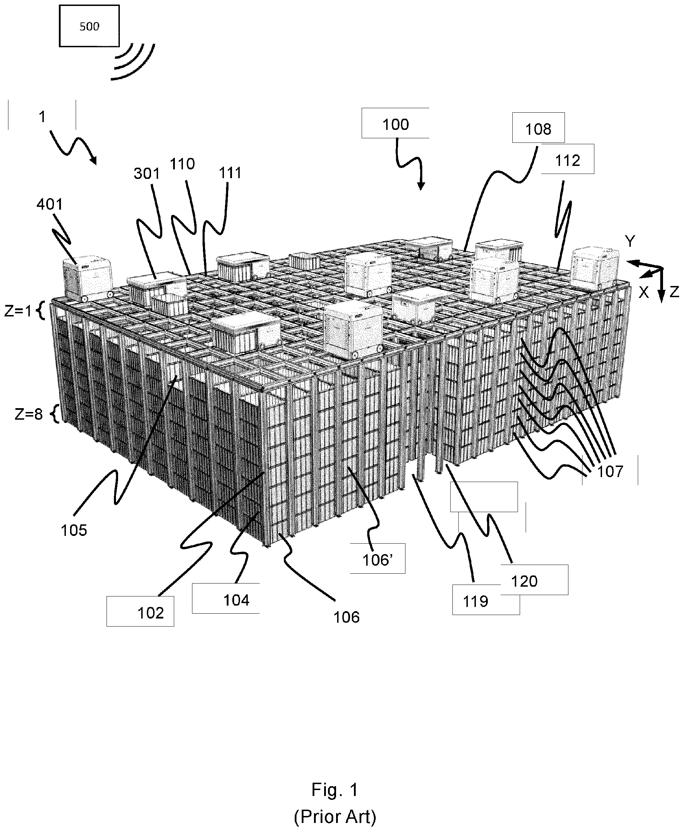

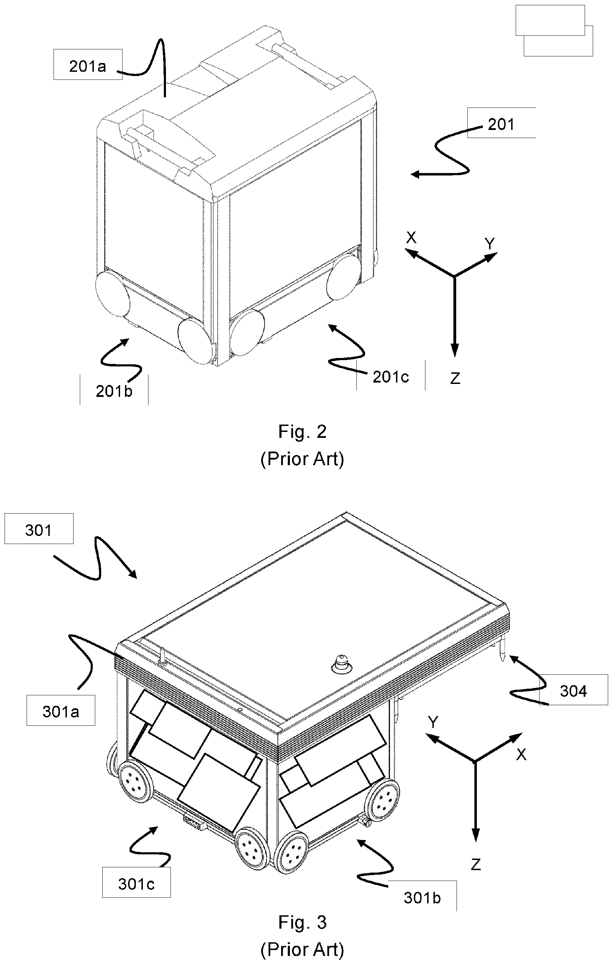

Fig. 1 discloses a prior art automated storage and retrieval system 1 with a framework structure 100 and Figs. 2, 3 and 4 disclose three different prior art container handling vehicles 201,301,401 suitable for operating on such a system 1.

The framework structure 100 comprises upright members 102 and a storage volume comprising storage columns 105 arranged in rows between the upright members 102. In these storage columns 105 storage containers 106, also known as bins, are stacked one on top of one another to form stacks 107. The members 102 may typically be made of metal, e.g. extruded aluminum profiles.

The framework structure 100 of the automated storage and retrieval system 1 comprises a rail system 108 arranged across the top of framework structure 100, on which rail system 108 a plurality of container handling vehicles 201,301,401 may be operated to raise storage containers 106 from, and lower storage containers 106 into, the storage columns 105, and also to transport the storage containers 106 above the storage columns 105. The rail system 108 comprises a first set of parallel rails 110 arranged to guide movement of the container handling vehicles 201,301,401 in a first direction *X* across the top of the frame structure 100, and a second set of parallel rails 111 arranged perpendicular to the first set of rails 110 to guide movement of the container handling vehicles 201,301,401 in a second direction *Y* which is perpendicular to the first direction *X.* Containers 106 stored in the columns 105 are accessed by the container handling vehicles 201,301,401 through access openings 112 in the rail system 108. The container handling vehicles 201,301,401 can move laterally above the storage columns 105, i.e. in a plane which is parallel to the horizontal *X-Y* plane.

The upright members 102 of the framework structure 100 may be used to guide the storage containers during raising of the containers out from and lowering of the containers into the columns 105. The stacks 107 of containers 106 are typically self-supporting.

Each prior art container handling vehicle 201,301,401 comprises a vehicle body 201a,301a,401a and first and second sets of wheels 201b, 201c, 301b, 301c,401b,401c which enable the lateral movement of the container handling vehicles 201,301,401 in the *X* direction and in the *Y* direction, respectively. In Figs. 2, 3 and 4 two wheels in each set are fully visible. The first set of wheels 201b,301b,401b is arranged to engage with two adjacent rails of the first set 110 of rails, and the second set of wheels 201c,301c,401c is arranged to engage with two adjacent rails of the second set 111 of rails. At least one of the sets of wheels 201b, 201c, 301b,301c,401b,401c can be lifted and lowered, so that the first set of wheels 201b,301b,401b and/or the second set of wheels 201c,301c,401c can be engaged with the respective set of rails 110, 111 at any one time.

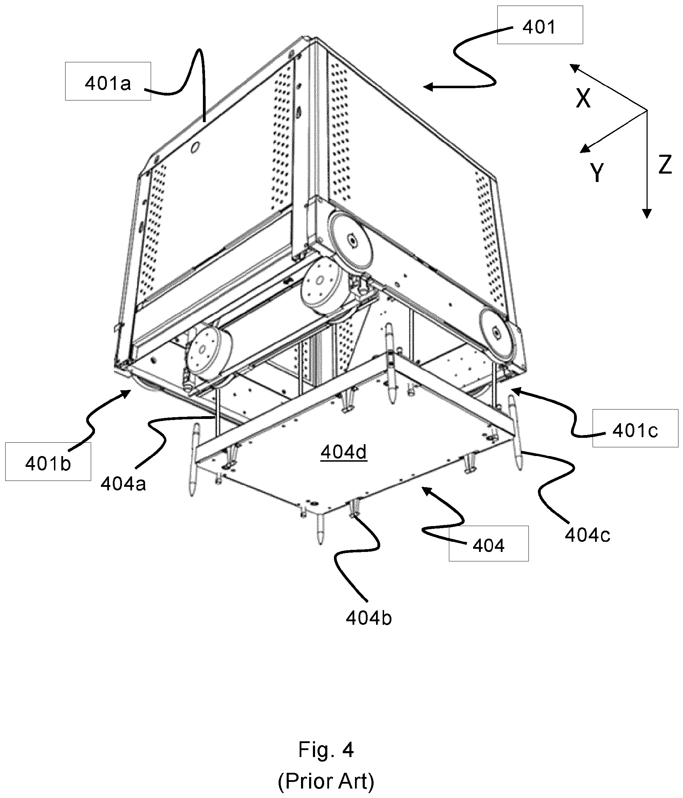

Each prior art container handling vehicle 201,301,401 also comprises a lifting device for vertical transportation of storage containers 106, e.g. raising a storage container 106 from, and lowering a storage container 106 into, a storage column 105. The lifting device comprises one or more gripping / engaging devices which are adapted to engage a storage container 106, and which gripping / engaging devices can be lowered from the vehicle 201,301,401 so that the position of the gripping / engaging devices with respect to the vehicle 201,301,401 can be adjusted in a third direction *Z* which is orthogonal the first direction *X* and the second direction *Y.* Parts of the gripping device of the container handling vehicles 301,401 are shown in Figs. 3 and 4 indicated with reference number 304,404. The gripping device of the container handling device 201 is located within the vehicle body 201a in Fig. 2 and is thus not shown.

Conventionally, and also for the purpose of this application, *Z*=1 identifies the uppermost layer available for storage containers below the rails 110,111, i.e. the layer immediately below the rail system 108, *Z*=2 the second layer below the rail system 108, *Z*=3 the third layer etc. In the exemplary prior art disclosed in Fig. 1, *Z*=8 identifies the lowermost, bottom layer of storage containers. Similarly, *X*=1..*.n* and *Y*=1...n identifies the position of each storage column 105 in the horizontal plane. Consequently, as an example, and using the Cartesian coordinate system *X, Y, Z* indicated in Fig. 1, the storage container identified as 106' in Fig. 1 can be said to occupy storage position *X*=17, *Y*=1, *Z*=6. The container handling vehicles 201,301,401 can be said to travel in layer *Z*=0, and each storage column 105 can be identified by its *X* and *Y* coordinates. Thus, the storage containers shown in Fig. 1 extending above the rail system 108 are also said to be arranged in layer *Z*=0.

The storage volume of the framework structure 100 has often been referred to as a grid 104, where the possible storage positions within this grid are referred to as storage cells. Each storage column may be identified by a position in an *X-* and *Y-*direction, while each storage cell may be identified by a container number in the *X-, Y-* and *Z*-direction.

Each prior art container handling vehicle 201,301,401 comprises a storage compartment or space for receiving and stowing a storage container 106 when transporting the storage container 106 across the rail system 108. The storage space may comprise a cavity arranged internally within the vehicle body 201a,401a as shown in Figs. 2 and 4 and as described in e.g. WO2O15/193278A1 and WO2019/206487A1, the contents of which are incorporated herein by reference.

Fig. 3 shows an alternative configuration of a container handling vehicle 301 with a cantilever construction. Such a vehicle is described in detail in e.g. NO317366, the contents of which are also incorporated herein by reference.

The cavity container handling vehicle 201 shown in Fig. 2 may have a footprint that covers an area with dimensions in the X and Y directions which is generally equal to the lateral extent of a storage column 105, e.g. as is described in WO2015/193278A1, the contents of which are incorporated herein by reference. The term 'lateral' used herein may mean 'horizontal'.

Alternatively, the cavity container handling vehicles 401 may have a footprint which is larger than the lateral area defined by a storage column 105 as shown in Fig. 1 and 4, e.g. as is disclosed in WO2014/090684A1 or WO2019/206487A1.

The rail system 108 typically comprises rails with grooves in which the wheels of the vehicles run. Alternatively, the rails may comprise upwardly protruding elements, where the wheels of the vehicles comprise flanges to prevent derailing. These grooves and upwardly protruding elements are collectively known as tracks. Each rail may comprise one track, or each rail 110,111 may comprise two parallel tracks. In other rail systems 108, each rail in one direction (e.g. an X direction) may comprise one track and each rail in the other, perpendicular direction (e.g. a Y direction) may comprise two tracks. Each rail 110,111 may also comprise two track members that are fastened together, each track member providing one of a pair of tracks provided by each rail.

WO2018/146304A1, the contents of which are incorporated herein by reference, illustrates a typical configuration of rail system 108 comprising rails and parallel tracks in both *X* and *Y* directions.

In the framework structure 100, a majority of the columns 105 are storage columns 105, i.e. columns 105 where storage containers 106 are stored in stacks 107. However, some columns 105 may have other purposes. In Fig. 1, columns 119 and 120 are such special-purpose columns used by the container handling vehicles 201,301,401 to drop off and/or pick up storage containers 106 so that they can be transported to an access station (not shown) where the storage containers 106 can be accessed from outside of the framework structure 100 or transferred out of or into the framework structure 100. Within the art, such a location is normally referred to as a 'port' and the column in which the port is located may be referred to as a 'port column' 119,120. The transportation to the access station may be in any direction, that is horizontal, tilted and/or vertical. For example, the storage containers 106 may be placed in a random or dedicated column 105 within the framework structure 100, then picked up by any container handling vehicle and transported to a port column 119,120 for further transportation to an access station. The transportation from the port to the access station may require movement along various different directions, by means such as delivery vehicles, trolleys or other transportation lines. Note that the term 'tilted' means transportation of storage containers 106 having a general transportation orientation somewhere between horizontal and vertical.

In Fig. 1, the first port column 119 may for example be a dedicated drop-off port column where the container handling vehicles 201,301,401 can drop off storage containers 106 to be transported to an access or a transfer station, and the second port column 120 may be a dedicated pick-up port column where the container handling vehicles 201,301,401 can pick up storage containers 106 that have been transported from an access or a transfer station.

The access station may typically be a picking or a stocking station where product items are removed from or positioned into the storage containers 106. In a picking or a stocking station, the storage containers 106 are normally not removed from the automated storage and retrieval system 1, but are returned into the framework structure 100 again once accessed. A port can also be used for transferring storage containers to another storage facility (e.g. to another framework structure or to another automated storage and retrieval system), to a transport vehicle (e.g. a train or a lorry), or to a production facility.

A conveyor system comprising conveyors is normally employed to transport the storage containers between the port columns 119,120 and the access station.

If the port columns 119,120 and the access station are located at different levels, the conveyor system may comprise a lift device with a vertical component for transporting the storage containers 106 vertically between the port column 119,120 and the access station.

The conveyor system may be arranged to transfer storage containers 106 between different framework structures, e.g. as is described in WO2014/075937A1, the contents of which are incorporated herein by reference.

When a storage container 106 stored in one of the columns 105 disclosed in Fig. 1 is to be accessed, one of the container handling vehicles 201,301,401 is instructed to retrieve the target storage container 106 from its position and transport it to the drop-off port column 119. This operation involves moving the container handling vehicle 201,301,401 to a location above the storage column 105 in which the target storage container 106 is positioned, retrieving the storage container 106 from the storage column 105 using the container handling vehicle's 201,301,401 lifting device (not shown), and transporting the storage container 106 to the drop-off port column 119. If the target storage container 106 is located deep within a stack 107, i.e. with one or a plurality of other storage containers 106 positioned above the target storage container 106, the operation also involves temporarily moving the above-positioned storage containers prior to lifting the target storage container 106 from the storage column 105. This step, which is sometimes referred to as "digging" within the art, may be performed with the same container handling vehicle that is subsequently used for transporting the target storage container to the drop-off port column 119, or with one or a plurality of other cooperating container handling vehicles. Alternatively, or in addition, the automated storage and retrieval system 1 may have container handling vehicles 201,301,401 specifically dedicated to the task of temporarily removing storage containers 106 from a storage column 105. Once the target storage container 106 has been removed from the storage column 105, the temporarily removed storage containers 106 can be repositioned into the original storage column 105. However, the removed storage containers 106 may alternatively be relocated to other storage columns 105.

When a storage container 106 is to be stored in one of the columns 105, one of the container handling vehicles 201,301,401 is instructed to pick up the storage container 106 from the pick-up port column 120 and transport it to a location above the storage column 105 where it is to be stored. After any storage containers 106 positioned at or above the target position within the stack 107 have been removed, the container handling vehicle 201,301,401 positions the storage container 106 at the desired position. The removed storage containers 106 may then be lowered back into the storage column 105, or relocated to other storage columns 105.

For monitoring and controlling the automated storage and retrieval system 1, e.g. monitoring and controlling the location of respective storage containers 106 within the framework structure 100, the content of each storage container 106, and the movement of the container handling vehicles 201,301,401 so that a desired storage container 106 can be delivered to the desired location at the desired time without the container handling vehicles 201,301,401 colliding with each other, the automated storage and retrieval system 1 comprises a control system 500 which typically is computerized and which typically comprises a database for keeping track of the storage containers 106.

There are typically four bands attaching the lifting platform to the container handling vehicle. The bands are each wound up on their own spool in layers on top of each other. A small difference in thickness between the bands will accumulate when it is wound onto the spool. The difference in thickness between the bands can in some situations make the lifting platform lift unevenly over the height of the storage and retrieval system. If a container handling vehicle is lifting a container from the bottom of a 14 container heigh stack for example, the container can get stuck since the difference in thickness in the bands will result in the lifting platform slanting.

One or more aspects of the invention of the present application are set out in the claims.

### SUMMARY

According to a first aspect there is provided a container handling vehicle for an automated storage and retrieval system, wherein the container handling vehicle comprises: a vehicle body; wheels connected to the vehicle body, for moving the container handling vehicle; a container lifting platform, for lifting a container within a storage column of the automated storage and retrieval system; a plurality of wires for connecting the vehicle body to the container lifting platform; each of the plurality of wires having an associated spool configured to receive a wire of the plurality of wires; and one or more position controllers for controlling the spooling position of each of the plurality of wires around its associated spool to form a plurality of adjacent turns around an outer surface of the spool.

Such an arrangement can seek to avoid differences in thickness between the wires or lines in the spools affecting the level of evenness of the lifting platform since each line or wire is wound or coils successively on each rotation of the spool next to itself on a spool as the wire is wound across the spool.

Optionally, the spools are positioned on a single axle.

Optionally, the vehicle comprises two axles with two spools positioned on each axle.

Optionally, each of said plurality of wires has an associated wire tensioner.

Optionally, the wire tensioner comprises a spring-loaded pulley wheel.

Optionally, each of said plurality of wires has an associated guide wheel for guiding a wire towards a spool.

Optionally, the container lifting platform has four wires for connecting the vehicle body to the container lifting platform.

Optionally, the one or more position controllers comprise at least one groove provided on an outer surface of the associated spool.

Optionally, an associated spool has a groove extending helically around an outer surface of the spool for receiving and positioning the wire on the spool.

Optionally, the position controller comprises a guiding mechanism configured to guide a wire onto a spool.

Optionally, the guiding mechanism is comprised of a wire guide guiding the wire onto and off the spool by moving, for example rotating or laterally, as the wire is either wound onto or off the spool.

Optionally, the guiding mechanism is configured to intercept a portion of the wire, before it wraps around its associated spool, to direct the portion of the wire towards a target position on an outer surface of the spool.

Optionally, the guiding mechanism is configured to move, relative to the spool, to dynamically change the target position for the wire on the outer surface of the spool, so that the wire forms a plurality of adjacent coils thereon.

Optionally, the guiding mechanism comprises a wire guide, for example, a tube, groove or other form to receive a wire, supported on a guiding arm which guides a wire. It may intercept the wire before it wraps around the spool.

Optionally, the guiding mechanism may move as the wire is would to ensure it winds successively adjacent to itself as it is wound.

The guiding arm may be provided with actuators to control its angle and/or lateral movement with respect to a spool. Two actuators may be provided. One actuator may orientate the arm with respect to the circumferential surface of the spool so that a wire is wrapped at a predetermined angle on the spool. Such a winding angle may be 45 degrees. A second actuator may move the guiding arm parallel to the axis of the spool so that the wire is wrapped around the spool to form adjacent turns.

Optionally, the guiding arm of the guiding mechanism may be configured to change orientation, for example from 45 degrees to -45 degrees with respect to the axis of the spool as the wound wire reaches the end of a spool. Successive winding may then be made on top of the wire already wound on the spool in a controlled manner.

Optionally, the vehicle comprises an electric motor to control movement of an associated spool.

The spools may be positioned on an axle attached to the container handling vehicle via ball bearings allowing it to rotate.

The axle may be controlled by an electric motor used for winding the wires onto or off the spools.

Optionally, the container lifting platform is attached to the container handing vehicle by wires positioned to ensure the container lifting platform is balanced.

Optionally, there may be four wires, for example, in respective corner areas of the lifting platform.

Optionally, the or each wire is configured to run from the container lifting platform, over a guide wheel, to the spool.

Optionally, each of the plurality of wires is a metal wire, for example, steel. Such a material may allow for the wires to carry communication signals or power.

Each of the plurality of wires may be a polymer line.

According to second aspect, there is provided a lifting system for a container handling vehicle according to the first aspect or any optional feature thereof, the lifting system comprising: a plurality of wires for connecting the vehicle body to the container lifting platform; each of the plurality of wires having an associated spool configured to receive a wire of the plurality of wires; and one or more position controllers for controlling the spooling position of each of the plurality of wires around its associated spool to form a plurality of adjacent turns around an outer surface of the spool.

The lifting system may include any feature of the first aspect or any optional feature thereof.

The lifting system may be used without a container handing vehicle, for example a lift.

According to a third aspect there is provided a method of controlling movement of a container within an automated storage and retrieval system, using a container handling vehicle according to the first aspect of any optional feature thereof or a lifting system according to the second aspect, wherein the method comprises:
connecting the container to the container lifting platform;
moving the container lifting platform by controlling movement of an associated spool.

### BRIEF DESCRIPTION OF THE DRAWINGS

The disclosure will now be described in more detail in connection with a number of exemplary embodiments shown in the accompanying drawings, in which :
Fig. 1 is a perspective view of a framework structure of a prior art automated storage and retrieval system.
Fig. 2 is a perspective view of a prior art container handling vehicle having an internally arranged cavity for carrying storage containers therein.
Fig. 3 is a perspective view of a prior art container handling vehicle having a cantilever for carrying storage containers underneath.
Fig. 4 is a perspective view, seen from below, of a prior art container handling vehicle having an internally arranged cavity for carrying storage containers therein.
Fig. 5 is a perspective side view of an example lifting system for a container handling vehicle with the lifting platform attached.
Fig. 6 is a side view of the lifting system of Fig. 5.
Fig 7 is a perspective side view of a further example lifting system for a container handling vehicle with a lifting platform attached.
Fig. 8 is a perspective side view of a further example lifting system of a container handling vehicle with a lifting platform attached.
Fig. 9 is an enlarged view of a spool arrangement.
Fig. 10 is an enlarged view of a pulley wheel arrangement.
Fig. 11 is a cross section though a spool showing helical groves.
Fig. 12a shows an example guiding mechanism.
Fig. 12b shows an example operation of the guiding mechanism of Fig. 12a.

### DETAILED DESCRIPTION

The disclosure relates to a container handling vehicle for an automated storage and retrieval system. The container handling vehicle comprises a vehicle body; wheels connected to the vehicle body, for moving the container handling vehicle; a container lifting platform, for lifting a container within a storage column of the automated storage and retrieval system; a plurality of wires for connecting the vehicle body to the container lifting platform; each of the plurality of wires having an associated spool configured to receive a wire of the plurality of wires; and one or more position controllers for controlling the spooling position of each of the plurality of wires around its associated spool to form a plurality of adjacent turns around an outer surface of the spool.

In the following, embodiments of the invention will be discussed in more detail with reference to the appended drawings. It should be understood, however, that the drawings are not intended to limit the invention to the subject-matter depicted in the drawings.

The framework structure 100 of the automated storage and retrieval system 1 is constructed in a similar manner to the prior art framework structure 100 described above in connection with Figs. 1-3. That is, the framework structure 100 comprises a number of upright members 102, and comprises a first, upper rail system 108 extending in the X direction and Y direction.

The framework structure 100 further comprises storage compartments in the form of storage columns 105 provided between the upright members 102 wherein storage containers 106 are stackable in stacks 107 within the storage columns 105.

The framework structure 100 can be of any size. In particular it is understood that the framework structure can be considerably wider and/or longer and/or deeper than disclosed in Fig. 1. For example, the framework structure 100 may have a horizontal extent of more than 700×700 columns and a storage depth of more than twelve containers.

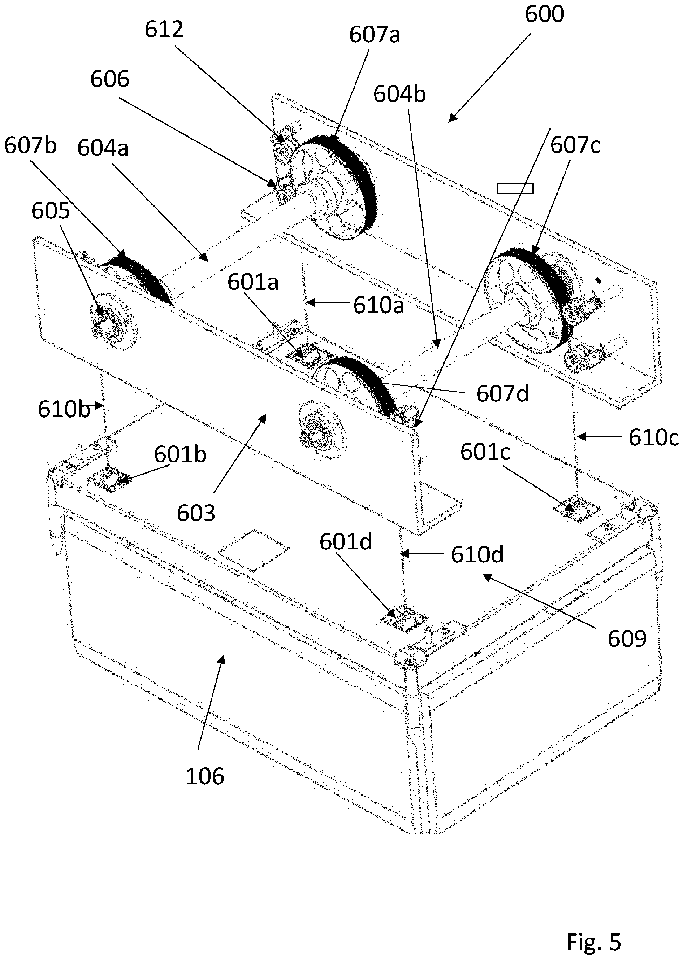

Exemplary embodiments of the automated storage and retrieval system will now be discussed in more detail with reference to Figs 5-11.

Fig. 5 is a perspective side view of a lifting system 600 of a container handling vehicle with a lifting platform 609 attached. The rest of the container handling vehicle is not shown, but it should be understood this can be in the form of any of the container handling vehicles as described in relation to Figs. 2 to 4. The lifting system 600 may be used without a container handling vehicle.

In Fig. 5 a container 106 is attached to the lifting platform 609 by gripping devices on the lifting platform 609. From the top side of the lifting platform 609 there are attached four wires 610a, 610b, 610c, 610d at connection points 601a, 601b, 601c, 601d. These wires 610a-d are placed so that the lifting platform 609 is steady and level. In Fig. 5, this is in the vicinity of each corner of the lifting platform 609. As can be seen in Fig. 5, the connection points 601c,d on one end of the lifting platform 609 are spaced further inwards from the longitudinal edges of the lifting platform 609 than the connection points 601a, b on the other end of the lifting platform 609.

From the top of the lifting platform 609, the wires 6ioa-d go to up through holes in a respective horizontal flange section of L-shaped brackets 603. In the example, there are two brackets 603 arranged parallel and spaced from one another. These brackets 603 may be used to attach the lifting system to the container handling vehicle or other structure and may be fitted to and/or within the envelope of a container handling vehicles as described in relation to Figs. 2 to 4.

From the holes in the brackets 603, each wire 610a-d extends past an associated wire tensioner, which in the example is a sprung pulley wheel 606. The wire tensioner 606 ensures that the wire is under tension as it is wound on and off of an associated spool 607a, 607b, 607c, 607d. This helps to ensure that the wire does not get wound up incorrectly on the spool 607a, 607b, 607c, 607d.

The spool 607a, 607b 607c, 607d may be formed as a wheel which may have a groove that helically extends around the outer edge of the wheel. The wire 610 may rest in this groove when it is wound onto the spool 607a, 607b 607c, 607d. Each wire 610 is wound onto its own associated spool 607a, 607b 607c, 607d. In the example, four spools 607a, 607b, 607c, 607d are provided, one for each wire 610. The spools may be arranged with an outer circumferential edge directly or nearly directly in line with the vertical wire as it extends through the bracket 603.

All the spools 607a, 607b 607c, 607d are attached to a rod or axle 604a, 604b. In the example, there are two spools 607a, 607b on a first axle 604a and two spools 607c, 607d on a second axle 604b. The two axles 604a, 604b are parallel and spaced from one another. The spools 607a, 607b 607c, 607d may be spaced apart on the respective axle 604a, 604b. Each axle 604a, 604b may be driven by an electric motor (not shown) that rotates the respective spool 607a, 607b, 607c, 607d. The axles 604a, 604b may be supported in the brackets 603 using bearings 605.

Each spool 607a, 607b 607c, 607d may be provided with a position controller configured to control the position of the wire 610 to form a plurality of adjacent turns around an outer surface of the associated spool 607a, 607b 607c, 607d, each turn being positioned next to the previous turn across a width of the spool 607 by the position controller. In this way, any differences in thickness of the wire should not result in different lengths of the four wires as they wind around the spools.

In the example, the position controller may take the form of helical grooves formed on the outer surface of the spools 607a, 607b 607c, 607d.

The arrangement of wire tensioners, for example in the form of spring pulleys, and control of the speed of winding on the spool may also provide for position control of the wire on the spool as it is wound.

A roller 612, for example, a sprung wheel, sprung to bias the wheel against the spool 607a-d, may be provided on each spool 607a, 607b 607c, 607d to prevent the wound wire from coming away from the spool 607a, 607b 607c, 607d. In the example, it should be understood that each of the spools functions in a similar manner.

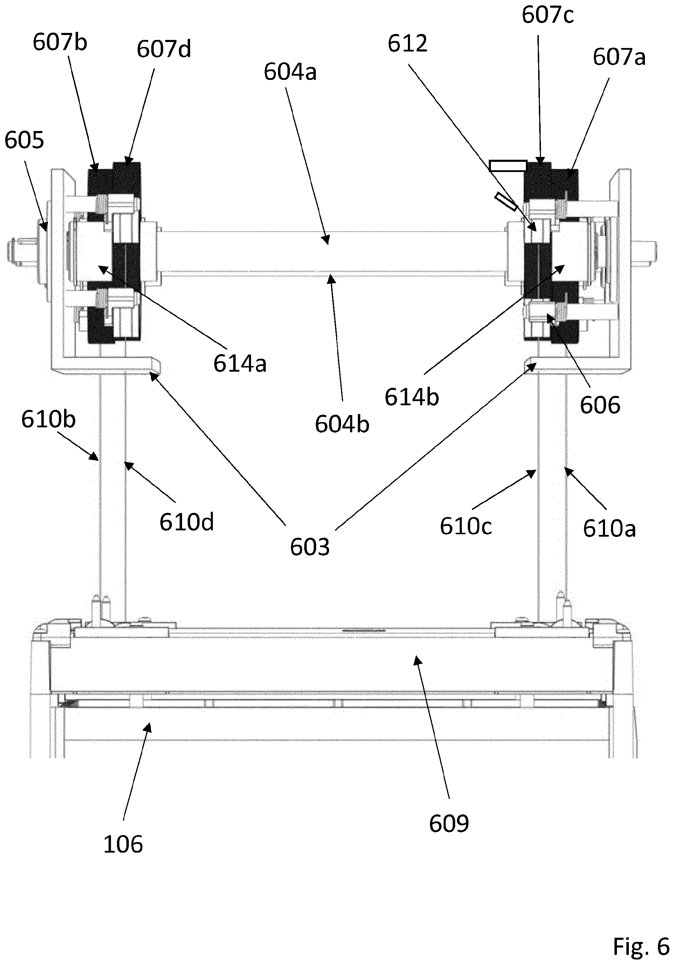

Fig. 6 shows a side view of the lifting system 600 as shown in Fig. 5. As can be seen in Fig 6, the wires 610a-d, extend vertically and parallel to one another. Because the connection points 601c,d on one end of the lifting platform 609 are spaced further inwards from the longitudinal edges of the lifting platform 609 than the connection points 601a, b on the other end of the lifting platform 609, the spools 607c, d on this end have a spacer 614a, 614b between the bracket 603 and the spool 607c, d.

When it is desired to raise the lifting platform, the motor is activated to rotate the axles 604a, 604b on which the spools 607a-d are arranged causing the spools 607a-d to rotate and wind up the wires 610a-d. The tensioners 606 ensure the wires 610a-d are maintained under tension as the wires 610a-d are wound. The helical groove on each spool 607a-d, causes the wires 610a-d to be wound in adjacent turns on the spools 607a-d. The rollers 612 maintain the wires 610a-d on the spools 607a-d.

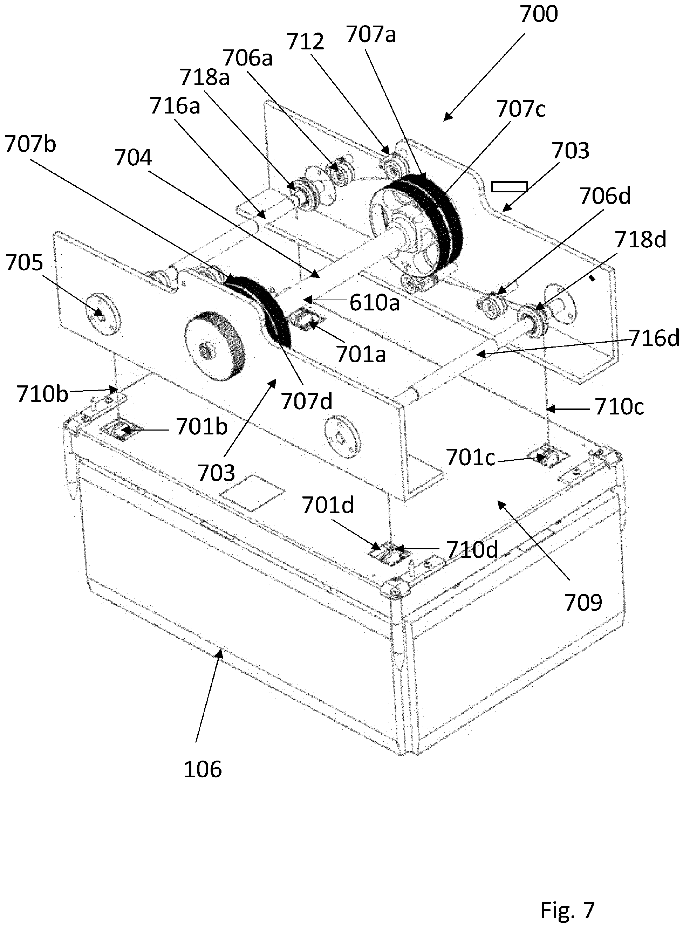

Fig. 7 is a perspective side view of a further example lifting system 700 of a container handling vehicle with a lifting platform 709 attached. The rest of the container handling vehicle is not shown, but it should be understood this can be in the form of any of the container handling vehicles as described in relation to Figs. 2 to 4. The lifting system 700 may also be used without a container handling vehicle. The form and function of many of the parts shown is the same or similar to that shown and described in relation to Figs. 5-6 and the differences will be concentrated upon here.

In Fig. 7 a container 106 is attached to the lifting platform 709 by gripping devices on the lifting platform 709. From the top side of the lifting platform 709 there are attached four wires 710a, 710b, 710c, 710d at connection points 701a, 701b, 7010, 701d. These wires 710a-d are placed so that the lifting platform 709 is steady and level. In Fig. 7, this is in the vicinity of each corner of the lifting platform 709. As can be seen in Fig. 7, the connection points 701c,d on one end of the lifting platform 709 are spaced further inwards from the longitudinal edges of the lifting platform 709 than the connection points 701a, b on the other end of the lifting platform 609.

From the top of the lifting platform 709 the wires 710a-d go or extend vertically up through holes in a respective horizontal flange section of L-shaped brackets 703. In the example, there are two brackets 703 arranged parallel and spaced from one another. These brackets 703 may be used to attach the lifting system to the container handling vehicle or other structure and may be fitted to and/or within the envelope of a container handling vehicles as described in relation to Figs. 2 to 4.

From the holes in the brackets 703, in contrast to the example of Figs. 5-6, each wire 710a-d passes over a idler pulley 718a, 718d on an respective idler shaft 716a, 716d which is supported by bearings 605 in brackets 603. After passing over an idler puller 718a, 718d, the wires 710a-d, then pass an associated wire tensioner, which in the example is a sprung pulley wheel 706a, d similar to those described in relation to Figs. 5 and 6. The wire tensioner 706a, d ensures that the wire is under tension as it is wound on and off of an associated spool 707a, 707b, 707c, 707d. This helps to ensure that the wire does not get wound up incorrectly on the spool 707a, 707b, 707c, 707d.

The idler pulleys allow all spools 707a, 707b, 707c, 707d to be arranged on a single driven axle 704. Wires 710a, b from one side of the lighting platform 709 pass over their idler pully and connect with their associated spool 707a, 707b towards its uppermost circumferential edge. Wires 710c, d on the other side of the lifting platform 709 pass over their idler puller and connect with the associated spool towards its lowermost circumferential edge. This means that the spools may all rotate in the same direction (clockwise as viewed in Fig. 7) in order to wind up the wires 710a-d.

As with the example of Figs. 5-6, the spools 707a, 707b 707c, 707d may be formed as a wheel which may have a groove that helically extends around the outer edge of the wheel. The wire 710a-d may rest in this groove when it is wound onto the spool 707a, 707b 707c, 707d. Each wire 710a-d is wound onto its own associated spool 707a, 707b 707c, 707d. In the example, four spools 707a, 707b, 707c, 707d are provided, one for each wire 710a-d. The spools 707a-d are provided in spaced pairs towards each end of axle 704.

The axle 705 may be driven by an electric motor (not shown) that rotates the respective spools 707a-d. The axle 604 may be supported in the brackets 603 using bearings.

Each spool 707a-d may be provided with a position controller configured to control the position of the wire 710a-d to form a plurality of adjacent turns around an outer surface of the associated spool 707a-d, each turn being positioned next to the previous turn across a width of the spool by the position controller. In this way, any differences in thickness of the wire should not result in different lengths of the four wires as they wind around the spools.

In the example, the position controller may take the form of helical grooves formed on the outer surface of the spools 707a-d. In addition or alternatively, the position controller may take the form of a guiding mechanism to guide the wire onto the spool as it is wound.

A roller 712, for example, a sprung wheel, may be provided on each spool 707a-d to prevent the wound wire from coming away from the spool. In the example, it should be understood that each of the spools functions in a similar manner.

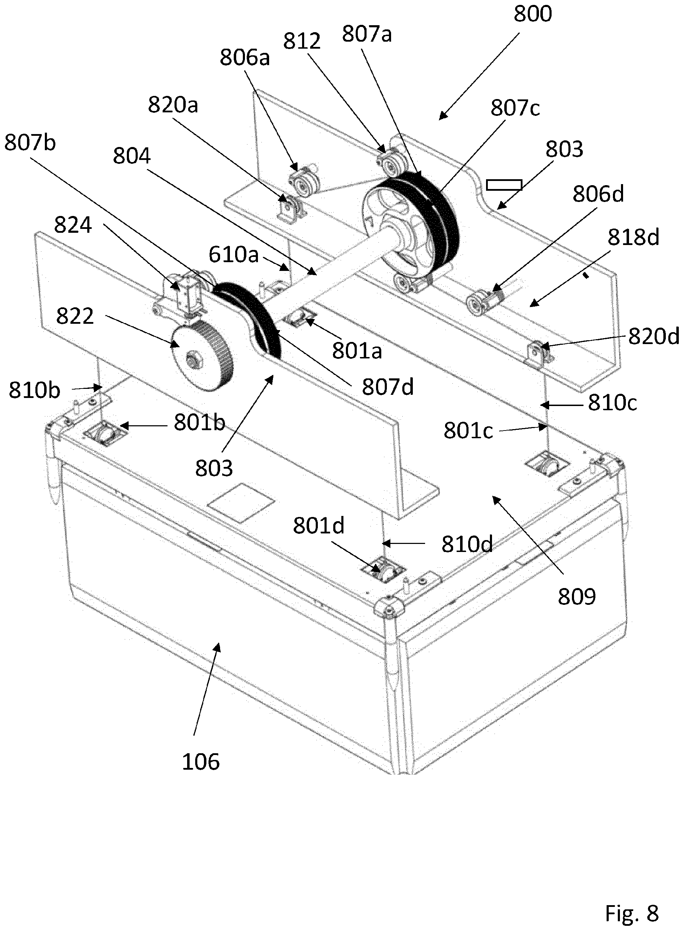

Fig. 8 is a perspective side view of a further example lifting system 800 of a container handling vehicle with a lifting platform 809 attached. The rest of the container handling vehicle is not shown, but it should be understood this can be in the form of any of the container handling vehicles described in relation to Figs. 2 to 4. The lifting system 800 maybe used without a container handling vehicle. The form and function of many of the parts shown is the same or similar to that shown and described in relation to Figs. 5-7 and the differences will be concentrated upon here.

In Fig. 8 a container 106 is attached to the lifting platform 809 by gripping devices on the lifting platform 809. From the top side of the lifting platform 809 there are attached four wires 810a, 810b, 810c, 810d at connection points 801a, 801b, 801c, 801d. These wires 810a-d are placed so that the lifting platform 809 is steady and level. In Fig. 8, this is in the vicinity of each corner of the lifting platform 809. As can be seen in Fig. 8, the connection points 801c,d on one end of the lifting platform 809 are spaced further inwards from the longitudinal edges of the lifting platform 809 than the connection points 801a, b on the other end of the lifting platform 809.

From the top of the lifting platform 809 the wires 810a-d go vertically up through holes in a respective horizontal flange section of L-shaped brackets 803. In the example, there are two brackets 803 arranged parallel and spaced from one another. These brackets 803 are used to attach the lifting system to the container handling vehicle or other structure and may be fitted within the envelope of a container handling vehicles as described in relation to Figs. 2 to 4.

From the holes in the brackets 803, in contrast to the example of Fig. 7, each wire 810a-d passes over a guide wheel 820a, 820d affixed to the horizontal flange of brackets 603. After passing over a guide wheel 820a, 820d, the wires 810a-d then pass an associated wire tensioner, which in the example is a sprung pulley wheel 806a, d. The wire tensioner 806a, d ensures that the wire is under tension as it is wound on and off of an associated spool 807a-d. This helps to ensure that the wire does not get wound up incorrectly on the spool 807a-d.

The guide wheels allow all spools 807a, 807b, 807c, 807d to be arranged on a single driven axle 804. Wires 810a, b from one side of the lighting platform 809 pass over their pulley wheel and connect with their associated spool 807a, 807b towards its uppermost circumferential edge. Wires 810c, d on the other side of the lifting platform 809 pass over their pulley wheel and connect with the associated spool 807 807c, d towards its lowermost circumferential edge. This means that the spools may all rotate in the same direction (clockwise as viewed in Fig. 7) in order to wind up the wires 810a-d.

As with the example of Figs. 5-7, the spools 807a, 807b 807c, 807d may be formed as a wheel which may have a groove that helically extends around the outer edge of the wheel. The wire 810a-d may rest in this groove when it is wound onto the spool 807a, 807b 807c, 807d. Each wire 810a-d is wound onto its own associated spool 807a, 807b 807c, 807d. In the example, four spools 807a, 807b, 807c, 807b are provided, one for each wire 810a-d. The spools 807a-d are provided in spaced pairs towards each end of axle 804.

The axle 805 may be driven by an electric motor (not shown) that rotates the respective spools 807a-d, for example via a drive cog 822. The axle 804 may be supported in the brackets 803 using bearings. A solenoid brake 824 may be provided to brake the axle 804 and the spools 807a-d thereon.

Each spool 807a-d may be provided with a position controller configured to control the position of the wire 810a-d to form a plurality of adjacent turns around an outer surface of the associated spool 807a-d, each turn being positioned next to the previous turn across a width of the spool by the position controller. In this way, any differences in thickness of the wire should not result in different lengths of the four wires as they wind around the spools.

In the example, the position controller may take the form of helical grooves formed on the outer surface of the spools 807a-d. In addition or alternatively, the position controller may take the form of a guide to guide the wire onto the spool as it is wound.

A roller 812, for example, a sprung wheel, may be provided on each spool 807a-d to prevent the wound wire from coming away from the spool. In the example, it should be understood that each of the spools functions in a similar manner.

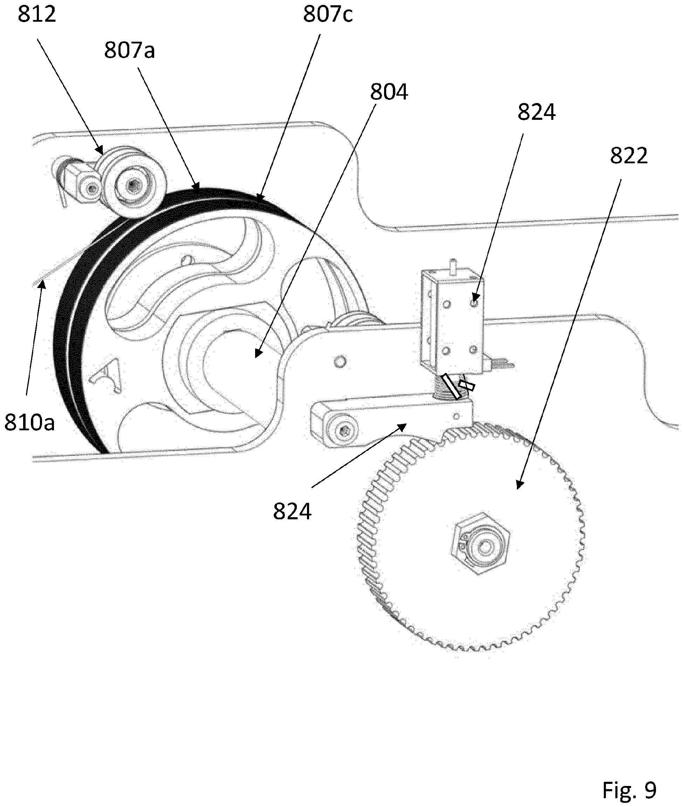

Fig. 9 shows an enlarged view of a spool arrangement, for example, that shown in Fig. 8. A wire 810a can be seen connecting with spool 807a towards the uppermost circumferential point of the spool 807a. The spool has an open structure in order to reduce weight and rotational inertia. The spool 807a is paired with a spool 807c for another wire and arranged on axle 804. The axle 804 is driven by toothed cog 822 using an electric motor (not shown). A drive chain or belt and intervening gearing may be used to couple the electric motor to the cog 822. A brake in the form of a pivoting arm 824 which engages with the teeth in cog 822 may be provided. The pivoting brake arm may be controlled using solenoid 824. A roller 812, for example, a sprung wheel, may be provided on spool 807a to prevent the wound wire from coming away from the spool. In the example, it should be understood that each of the spools functions in a similar manner.

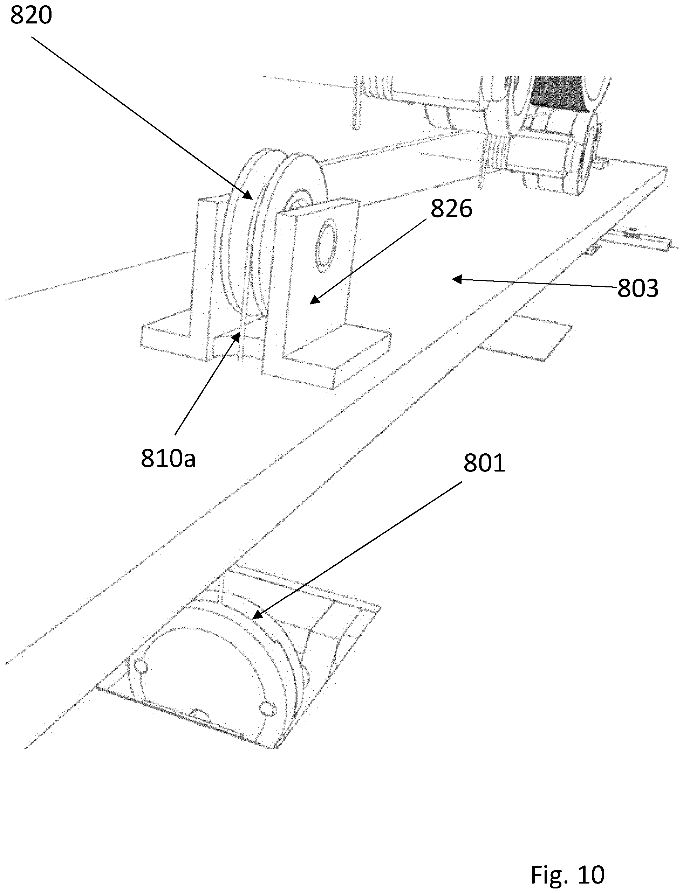

Fig. 10 shows an enlarged view of a pulley wheel 820 as shown in Fig. 8. The pulley wheel 820 guides the wire 810a after the wire extends up through the bracket 803 allowing the wire to change direction. The pulley wheel 820 is held in pulley bracket 826 on bracket 803.

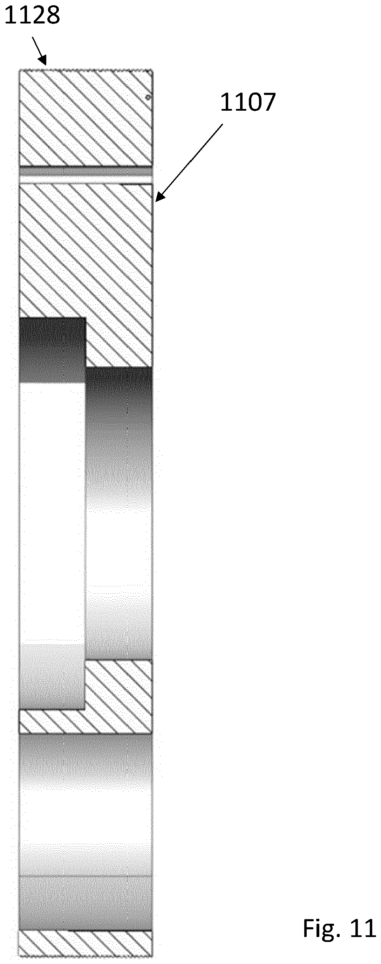

Fig. 11 shows a cross-section of a pulley wheel 1107 as described in relation to Figs. 5 to 10. Around the edge of the pulley wheel 1107, a helical groove 1128 is provided which guides a wire so that it forms adjacent turns on the spool 1107.

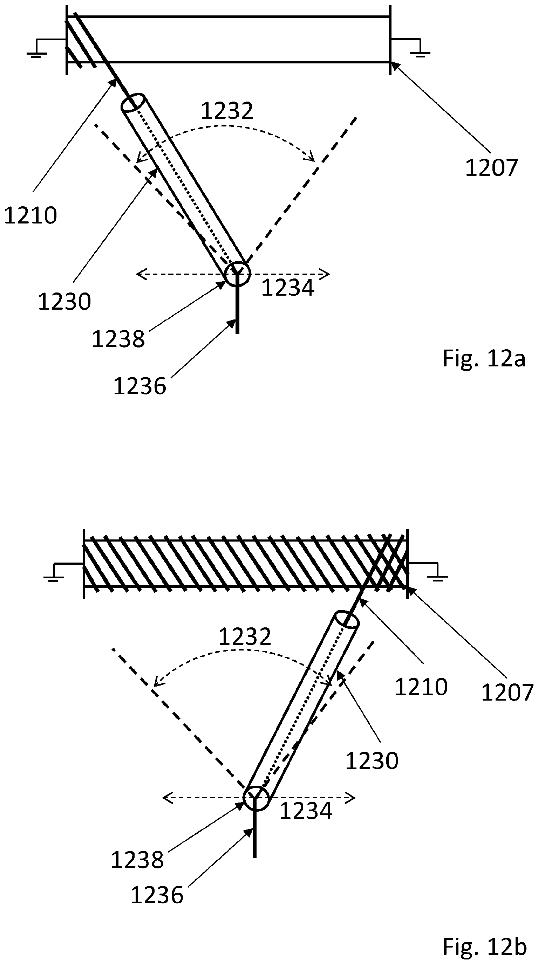

As shown schematically in Figs. 12a and 12b, in addition or alternatively to the use of a groove on a spool, the position controller may take the form of a guiding mechanism to guide the wire onto the spool as it is wound. This could be a wire guide, for example, a tube, groove or other form to receive a wire, supported on a guiding arm 1230 which guides a wire 1210. It may intercept the wire 1210 before it wraps around the spool 1207. In Fig. 12a, the wire guide is tubular and the wire 1210 extends through the guide to spool 1207. The other end 1236 of the wire 1210 extends back to a lifting platform for example. Wire tensioners, pulleys, axles and other features of the examples of Figs. 5 to 11 may also be used with this arrangement. The guiding mechanism may move as the wire is would to ensure it winds successively adjacent to itself as it is wound. The guiding arm 1230 may, for example, be provided with one or more actuators. An actuator may be provided which may angularly orientate the arm (see arrow 1232) with respect to the circumferential surface of the spool so that a wire is wrapped at a predetermined angle on the spool. Such a winding angle may be 45 degrees. The guiding arm 1230 may have a hinged guide hole 1238. The position of where the wire 1210 exits the guiding arm 1230 can be held at the same or approximately the same position during the lifting cycle. In addition or alternatively, an actuator may move the guiding arm 1230 parallel (see arrow 1234) to the axis of the spool 1207 so that the wire 1210 is wrapped around the spool 1207 to form adjacent turns. A separate actuator may be provided for each of the rotational and parallel movement.

In a further mode of operation of the position controller described and shown in Fig. 12a, if the spool 1207 cannot accommodate the wound wire 1210 with adjacent turns, the above-mentioned guiding arm 1230 of the guiding mechanism may be configured to change orientation, for example from 45 degrees to -45 degrees with respect to the axis of the spool 1207 as the wound wire reaches the end of a spool. This is shown in Fig. 12b. Successive winding may then be made in the reverse lateral direction on top of the wire already wound on the spool in a controlled manner.

The wires described in relation to any of the Figs. 1 to 12b may be formed of metal, for example steel. The wire may be a single strand wire. When formed or metal, the wires may carry communication signals or power. The wires can also be polymer wires.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A container handling vehicle for an automated storage and retrieval system, wherein the container handling vehicle comprises:
• a vehicle body;
• wheels connected to the vehicle body, for moving the container handling vehicle;
• a container lifting platform, for lifting a container within a storage column of the automated storage and retrieval system;
• a plurality of wires for connecting the vehicle body to the container lifting platform;
• each of the plurality of wires having an associated spool configured to receive a wire of the plurality of wires; and
• one or more position controllers for controlling the spooling position of each of the plurality of wires around its associated spool to form a plurality of adjacent turns around an outer surface of the spool.

2. A container handling vehicle according to claim 1, wherein the spools are positioned on a single axle.

3. A container handling vehicle according to claim 1, comprising two axles with two spools positioned on each axle.

4. A container handling vehicle according to claim 1 or 2, wherein each of said plurality of wires has an associated wire tensioner.

5. A container handling vehicle according to claim 4, wherein the wire tensioner comprises a spring-loaded pulley wheel.

6. A container handing vehicle according to any of the proceeding claims, wherein each of said plurality of wires has an associated guide wheel for guiding a wire towards a spool.

7. A container handling vehicle according to any of the previous claims, wherein the container lifting platform has four wires for connecting the vehicle body to the container lifting platform.

8. A container handling vehicle according to any of the preceding claims,
wherein the one or more position controllers comprise at least one groove provided on an outer surface of the associated spool.

9. A container handling vehicle according to any preceding claims wherein an associated spool has a groove extending helically around an outer surface of the spool for receiving and positioning the wire on the spool.

10. A container handling vehicle according to any of the preceding claims
wherein the position controller comprises a guiding mechanism configured to guide a wire onto a spool.

11. A container handling vehicle according to claim 8 or 9 wherein the guiding mechanism is comprised of a wire guide guiding the wire onto and off the spool by moving as the wire is either wound onto or off the spool.

12. A container handling vehicle according to any of the proceeding claims, comprising an electric motor to control movement of an associated spool.

13. A container handling vehicle according to any of the proceeding claims,
wherein each of the plurality of wires is a metal wire, for example, steel.

14. A lifting system for a container handling vehicle according to any of the preceding claims, the lifting system comprising:
• a plurality of wires for connecting the vehicle body to a container lifting platform;
• each of the plurality of wires having an associated spool configured to receive a wire of the plurality of wires; and
• one or more position controllers for controlling the spooling position of each of the plurality of wires around its associated spool to form a plurality of adjacent turns around an outer surface of the spool.

15. A method of controlling movement of a container within an automated storage and retrieval system, using a container handling vehicle according to any one of claims 1 to 13 of the lifting system of claim 14, wherein the method comprises:
connecting the container to the container lifting platform;
moving the container lifting platform by controlling movement of an associated spool.
